# EUROPÄISCHE PATENTSCHRIFT

(11) **EP 0 391 150 B1**
(45) Veröffentlichungstag und Bekanntmachung des Hinweises auf die Patenterteilung: **12.05.1993**
(21) Anmeldenummer: 90105410.6
(22) Anmeldetag: 22.03.1990
(51) Int. Cl.: C04B 35/58, C01B 21/06

(54) **Verfahren zur Herstellung kohlenstoffarmer, feinteiliger Keramikpulver**
Process for the production of low-carbon fine particle ceramic powder
Procédé de production de poudre céramique en particules fines pauvre en carbone

(30) Priorität: 04.04.1989 DE 3910781
(43) Veröffentlichungstag der Anmeldung: 10.10.1990
(73) Patentinhaber: BAYER AG, 51368 Leverkusen (DE)
(72) Erfinder: Krumbe, Wolfgang, Dr., D-4150 Krefeld (DE); Laubach, Benno, Dr., D-4150 Krefeld (DE); Gerhard, Franz, Dr., D-4150 Krefeld 1 (DE)

(56) Entgegenhaltungen:
- EP-A- 0 015 422
- EP-A- 0 247 907
- EP-A- 0 289 440
- US-A- 2 962 359

## Beschreibung

Die vorliegende Erfindung betrifft ein Verfahren zur Verringerung des Kohlenstoffgehaltes von feinteiligen Keramikpulvern oder Gemischen von Keramikpulvern mit elementarem Kohlenstoff.

Feinteilige keramische Pulver sind wegen ihrer hohen Sinteraktivität als Ausgangsstoffe zur Herstellung von keramischen Formkörpern interessant, wobei eine Vielzahl von Anwendungen sowohl in der Ingenieurkeramik als auch in der Bio- und Elektrokeramik erschlossen wurden. Bei vielen dieser Anwendungen kommt es auf hohe Reinheit der keramischen Materialien an, um deren geforderte physikalische oder chemische Eigenschaften zu gewährleisten.

Bei den nichtoxidischen Keramikmaterialien sind neben den metallischen Verunreinigungen die Gehalte an Kohlenstoff und Sauerstoff von zentraler Bedeutung. So wird beschrieben, daß die Sinterfähigkeit mit Zunahme des Kohlenstoffgehalts im Si₃N₄-Pulver deutlich abnimmt (H. Hausner, R. Petsch, Keramische Komponenten für Fahrzeug-Gasturbinen III, Statusseminar im Auftrag des Bundesministeriums für Forschung und Technologie, 44-54, Springerverlag, Berlin, 1984). Ebenfalls negativ beeinflußt wird die Hochtemperatur-Oxidationsbeständigkeit von Si₃N₄-Werkstoffen, die durch Kohlenstoffverunreinigung stark vermindert wird (H. Knoch, G. E. Gatzer, Journal of the American Ceramic Society 62 (11-12), 634-635, 1979).

Für die Herstellung derartiger keramischer Werkstoffe können die verwendeten Sinterpulver nach verschiedenen chemischen Verfahren dargestellt werden. Bei technisch relevanten Verfahren geht man meist von den Metallen oder deren Oxiden aus. Bei diesen Prozessen ist eine Kohlenstoffverunreinigung des Produkts nicht zu vermeiden. Durch Kohlenstoffverunreinigung der metallischen Rohstoffe, den Einsatz von Kohlenstoff oder kohlenstoffhaltigen Materialien zur Reduktion der Oxide, z.B. bei carbothermischen Nitridierungen oder Carborierungen, den Einsatz von kohlenstoffhaltigen Bindemitteln oder über Verunreinigungen der Atmosphäre, wie z.B. in den verwendeten Hochtemperaturöfen mit Graphitheizelementen oder bei Verwendung von Graphitglühkästen, wird Kohlenstoff in das Keramikpulver eingetragen.

Verfahren, bei denen die Keramikpulver aus hochreinen Verbindungen wie den Metallchloriden oder Hydriden hergestellt werden, können zwar zu den gewünschten kohlenstoffarmen Produkten führen, jedoch wird auch bei diesen in den weiteren Verarbeitungsschritten zur Herstellung keramischer Sinterpulver, wie Mahlung zur Desagglomeration oder Einmischung von Sinteradditiven oder bei der Sichtung zur Entfernung von Grobkorn, in vielfacher Weise Kohlenstoff eingetragen. So werden zur Vermeidung von metallischen Verunreinigungen beim Mahlen, Mischen und Sichten die Apparaturen mit organischen Polymeren ausgekleidet, deren Abrieb das Produkt mit kohlenstoffhaltigem Material verunreinigt. In vielen Fällen werden zur Vermeidung von Trockenagglomeraten oder Hydrolyse der feinteiligen Pulver organische Lösungsmittel eingesetzt. Durch Cracken der organischen Verbindungen, die als Rückstände im Pulver vorliegen, bildet sich dann bei den anschließenden Hochtemperaturprozessen die unerwünschte Kohlenstoffverunreinigung.

Zur Verringerung des Kohlenstoffgehaltes ist es Stand der Technik, das mit Kohlenstoff verunreinigte Keramikpulver in oxidierender Atmosphäre zu tempern. So werden AlN (US-A 2 962 359), Si₃N₄ (EP-B 15422) und SiC (EP-A 247907) bei Temperaturen zwischen 650 und 800°C in oxidierender Atmosphäre (Luft, Sauerstoff), geglüht.

Bei diesem Verfahren müssen aber besonders bei hochreinen Keramikpulvern Temperaturen oberhalb 600°C und lange Temperzeiten zur Oxidation des Kohlenstoffs angewendet werden, um niedrige Kohlenstoffgehalte zu erzielen, da wegen fehlender Schwermetallionen mit deren katalytischer Wirkung auf die Kohlenstoffverbrennung die Reaktion kinetisch gehemmt ist. Bei nichtoxidischen Keramikpulvern wie Nitriden, Carbiden und Boriden oder bei Oxiden in niedrigen Oxidationsstufen besteht dann die Gefahr einer Oxidation des Pulvers. Mit zunehmender Feinteiligkeit der Pulver, die meist für eine hohe Sinteraktivität unabdingbar ist, vergrößert sich die Gefahr der Oxidation. Selbst bei einem Material wie z.B. Siliciumnitrid, das als oxidationsbeständig bekannt ist, tritt bei hoher Feinteiligkeit beim Glühen an Luft schon bei Temperaturen unterhalb 1000°C eine starke Zunahme des Sauerstoffgehaltes ein. Bei amorphen Pulvern oder bei weniger oxidationsbeständigen, wie z.B. Aluminiumnitrid, ist das Problem zunehmend gravierender.

In den Fällen, in denen hohe Sauerstoffgehalte aber die Sinterfähigkeit stören, wie z.B. beim Siliciumcarbid, oder gewünschte physikalische Eigenschaften im Aluminiumnitrid (J. Phys. Chem. Solids Vol. 34 (1973) 321-335), muß daher auf eine hohe Feinteiligkeit verzichtet werden, oder es muß ein unerwünscht hoher Kohlenstoffgehalt in Kauf genommen werden, bzw. in einem weiteren Prozeß der bei der Entfernung des Kohlenstoffs eingeschleppte Sauerstoff wieder reduziert werden.

Die Aufgabe der vorliegenden Erfindung bestand deshalb darin, ein Verfahren zur Reduzierung des Kohlenstoffgehalts in feinteiligen Keramikpulvern zu entwickeln, daß die Nachteile der dem bekannten Stand der Technik angehörenden Verfahren nicht aufweist.

Überraschenderweise wurde gefunden, daß Kohlenstoffverunreinigungen aufweisende Keramikpulver nur einer Stickstoff und Wasserstoff und/oder Stickstoffwasserstoffverbindungen enthaltenden Atmosphäre, bei einer Temperatur im Bereich zwischen 600 und 1700 °C ausgesetzt werden müssen, um den Kohlenstoffgehalt zu reduzieren. Höhere Temperaturen sind aus wirtschaftlichen Gründen wenig sinnvoll. Gleichzeitig treten mit höherer Temperatur Probleme bei der Wahl geeigneter Tiegelmaterialien auf. Die Temperatmosphäre muß frei von Sauerstoff und Wasserdampf sein, damit eine Oxidation des Pulvers sicher ausgeschlossen werden kann. Gegenstand der vorliegenden Erfindung ist somit ein Verfahren zur Verringerung von Kohlenstoffverunreinigungen in feinteiligen Keramikpulvern einschließlich des Kohlenstoffüberschusses aus nach dem carbothermischen Verfahren erhaltenen Keramikpulvern, wobei das Keramikpulver oder das Gemisch von Keramikpulvern und Kohlenstoff einer thermischen Behandlung in Stickstoff und Wasserstoff und/oder Stickstoffwasserstoffverbindungen enthaltenden, sauerstoff- und wasserdampffreien Atmosphäre bei einer Temperatur im Bereich zwischen 600 und 1700 °C ausgesetzt werden.

Bevorzugt wird die Kohlenstoffabreicherung in einer Atmosphäre aus Ammoniakgas durchgeführt. Im Vergleich zu Stickstoff/Wasserstoff-Gemischen kann die Entfernung des Kohlenstoffs dann bei wesentlich niedrigeren Temperaturen durchgeführt werden und Ammoniak ist im Vergleich zu anderen Stickstoffwasserstoff-Verbindungen, wie z.B. Hydrazin, sicherheitstechnisch unbedenklicher und ökonomischer einsetzbar.

Dem Ammoniak können aus verfahrenstechnischen Gründen als Trägergas Inertgase wie N₂, H₂, Edelgase oder Mischungen dieser Gase zugesetzt werden.

Zur Beschleunigung der Kohlenstoffabreicherung ist es sinnvoll, die Temperbehandlung mit Ammoniak bei erhöhter Temperatur durchzuführen. Um eine Zersetzung des thermodynamisch instabilen Ammoniak in Stickstoff und Wasserstoff, die in bezug auf eine Kohlenstoffabreicherung wesentlich inaktiver sind, zu verhindern, wird bei Temperaturen oberhalb etwa 1000°C das Ammoniakgas bevorzugt über das Innenrohr zweier konzentrisch angeordneter Rohre eingeleitet und der Ringspalt zwischen den Rohren mit einem Inertgasstrom durchströmt wird. Das Einleitungsrohr wird hierdurch gekühlt und eine thermische Zersetzung des Ammoniakgases weitgehend verhindert.

Die thermische Behandlung der Keramikpulver erfolgt über einen Zeitraum von 0,15 bis 200 Stunden und hängt weitgehend von der Temperatur, der Gaszusammensetzung, den eingesetzten Materialien sowie der Gerätekonfiguration ab.

Da bei dem erfindungsgemäßen Verfahren keine Oxidationsmittel zur Kohlenstoffabreicherung benutzt werden, können feinteilige Nitride, Carbide, Carbonitride, Boride, Suboxide oder deren Mischphasen von Metallen oder Metalloiden von störendem Kohlenstoff weitestgehend befreit werden, ohne daß ein zweiter Verfahrensschritt zur Beseitigung von unerwünschten Oxidationsprodukten notwendig wäre. Als Materialien sind unter anderen B₄C, TiC, ZrC, WC, TiB₂, Si₃N₄, TiN, ZrN, Cr₂N, Ti(C,N) oder auch AlN, BN und SiC zu nennen.

Das Verfahren läßt sich ebenfalls vorteilhaft bei oxidationsempfindlichen Nitridglas-, Oxinitridglas- oder SIALON-Glaspulvern von Metallen oder Metalloiden einsetzen. Der Einsatz dieser Materialien wird wegen ihrer interessanten physikalischen Eigenschaften z.B. in der keramischen Verbindungstechnik oder als Sinteradditive verstärkt diskutiert. Sie können feinteilig durch carbothermische Nitridierung aus den entsprechenden Oxiden dargestellt werden, fallen dann aber mit Kohlenstoffpulver verunreinigt an.

Die Erfindung wird durch die folgenden Beispiele näher erläutert, ohne daß darin eine Einschränkung der Erfindung zu sehen ist.

Die in den folgenden Beispielen genannten Kohlenstoffgehalte wurden mit einem C-S-mat der Firma Ströhlein durch Verbrennung im Sauerstoffstrom bestimmt.

### Beispiel 1

5,16 g eines nach dem carbothermischen Verfahren hergestellten AlN-Pulvers, das mit vom Herstellungsprozeß bedingt mit Kohlenstoff verunreinigt ist, mit der chemischen Zusammensetzung:
Al: 41,7 %; N: 21,3 %; C: 36,0 %, O: 0,58 %
wurde in einem Quarzschiffchen 20 h in einem NH₃-Strom von 200 l/h bei einer Temperatur von 1200°C erhitzt.

Es wurden 3,3 g AlN-Pulver mit folgender chemischer Zusammensetzung erhalten:
Al: 64,2 %; N= 33,2 %; C: 0,085 %, O: 0,81 %.

Die spezifische Oberfläche (BET) des Produkts betrug 4,8 m²g⁻¹ (gemessen nach der 1-Punkt-N₂-Methode).

### Beispiel 2

1,46 g eines mit 22,0 % Kohlenstoff verunreinigten AlN-Pulvers mit einem Sauerstoffgehalt von 0,81 % wurde bei 1200°C in einem Quarzschiffchen 2 h mit einem NH₃-Strom von 150 l/h begast. Die Begasungslanze mit 8 mm Innendurchmesser reichte bis unmittelbar an die Pulverschüttung. Durch Kühlung mit Stickstoffgas wurde die Temperatur der Begasungslanze auf unter 800°C gehalten.

Es wurden 1,13 g AlN-Pulver mit einem Kohlenstoffgehalt von 0,16 % und einem Sauerstoffgehalt von 0,68 % erhalten. Die spezifische Oberfläche (BET) betrug 3,1 m²⁻¹ (gemessen nach der 1-Punkt-N₂-Methode).

### Beispiel 3

14,7 g eines nach dem carbothermischen Verfahren hergestellten kohlenstoffhaltigen Si₃N₄-Pulvers mit der chemischen Zusammensetzung
Si: 17,4 %; N: 8,3 %; C: 73 %; O: 0,46 %
wurde 165 h bei 1250°C in einem NH₃/N₂-Strom von 90/30 l/h erhitzt.

Der Rückstand, 3,5 g, bestand aus 98 % alpha-Si₃N₄ und 2 % beta-Si₃N₄ mit folgender chemischer Analyse:
Si: 53 %; N: 38,9 %., C: 0,56 %, O: 1,17 %.

### Beispiel 4

11 g eines nach dem carbothermischen Verfahrens hergestellten kohlenstoffhaltigen SiC/Si₃N₄-Composite-Pulvers mit einem Kohlenstoffgehalt von 70 % und einem Sauerstoffgehalt von 0,5 % wurde 6 h bei 1200°C in einem NH₃/N₂-Strom von 90/30 l/h erhitzt.

Die Röntgenbeugungsanalyse des Rückstands, 3,3 g, zeigte die Reflexe von beta-SiC, alpha-Si₃N₄ und beta-Si₃N₄. Die chemische Analyse des hellgrauen SiC/Si₃N₄-Composit-Pulvers ergab:
Si: 57,4 %, N: 28,4 %; C: 8,6 %; O: 1,66 %.

## Patentansprüche

1. Verfahren zur Verringerung von Kohlenstoffverunreinigungen in feinteiligen Keramikpulvern einschließlich des Kohlenstoffüberschusses aus nach dem carbothermischen Verfahren erhaltenen Keramikpulvern, dadurch gekennzeichnet, daß das Keramikpulver oder das Gemisch von Keramikpulvern und Kohlenstoff einer thermischen Behandlung in Stickstoff und Wasserstoff und/oder Stickstoffwasserstoffverbindungen enthaltenden, sauerstoff- und wasserdampffreien Atmosphäre bei einer Temperatur im Bereich zwischen 600° C und 1.700° C ausgesetzt werden.

2. Verfahren gemäß Anspruch 1, dadurch gekennzeichnet, daß die thermische Behandlung in einer Atmosphäre aus NH₃ oder NH₃ und Inertgas durchgeführt wird.

3. Verfahren gemäß Anspruch 2, dadurch gekennzeichnet, daß das Ammoniakgas bei Behandlungen oberhalb 1000°C über das Innenrohr zweier konzentrisch angeordneter Rohre eingeleitet wird, wobei der Ringspalt zwischen Außen- und Innenrohr mit einem Inertgasstrom gekühlt wird.

4. Verfahren gemäß einem oder mehreren der Ansprüche 1 bis 3, dadurch gekennzeichnet, daß die thermische Behandlung über einen Zeitraum von 0,15 bis 200 Stunden erfolgt.

5. Verfahren gemäß einem oder mehreren der Ansprüche 1 bis 4, dadurch gekennzeichnet, daß es sich bei den Keramikpulvern um Nitride, Carbide, Carbonitride, Boride, Suboxide von Metallen oder Metalloiden oder um deren Mischphasen oder physikalische Mischungen handelt.

6. Verfahren gemäß einem oder mehreren der Ansprüche 1 bis 4, dadurch gekennzeichnet, daß es sich bei den Keramikpulvern um Pulver zur Herstellung von Nitridgläsern, Oxinitridgläsern oder SIALON-Gläsern von Metallen oder Metalloiden handelt.

7. Verfahren gemäß einem oder mehreren der Ansprüche 1 bis 5, dadurch gekennzeichnet, daß es sich bei den Keramikpulvern um B₄C, TiC, ZrC, WC, TiB₂, Si₃N₄, TiN, ZrN, Cr₂N oder Ti(C,N) oder deren Mischphasen oder Gemische handelt.

8. Verfahren gemäß einem oder mehreren der Ansprüche 1 bis 5, dadurch gekennzeichnet, daß es sich bei dem Keramikpulver um AlN, BN oder SiC handelt.

## Claims

1. A process for reducing carbon impurities in fine-particle ceramic powders, including the excess carbon from ceramic powders obtained by the carbothermal method, characterized in that the ceramic powder or the mixture of ceramic powders and carbon is subjected to a heat treatment in an oxygen- and steam-free atmosphere containing nitrogen and hydrogen and/or nitrogen-hydrogen compounds at a temperature in the range from 600 to 1,700°C.

2. A process as claimed in claim 1, characterized in that the heat treatment is carried out in an atmosphere of NH₃ or NH₃ and inert gas.

3. A process as claimed in claim 2, characterized in that, where the heat treatment is carried out at temperatures above 1,000°C, the ammonia gas is introduced through the inner tube of two concentric tubes, the annular gap between the outer and inner tube being cooled by an inert gas stream.

4. A process as claimed in one or more of claims 1 to 3, characterized in that the heat treatment is carried out over a period of 0.15 to 200 hours.

5. A process as claimed in one or more of claims 1 to 4, characterized in that the ceramic powders are nitrides, carbides, carbonitrides, borides, suboxides of metals or metalloids or mixed phases or physical mixtures thereof.

6. A process as claimed in one or more of claims 1 to 4, characterized in that the ceramic powders are powders for the production of nitride glasses, oxynitride glasses or SIALON glasses of metals or non-metals.

7. A process as claimed in one or more of claims 1 to 5, characterized in that the ceramic powders are B₄C, TiC, ZrC, WC, TiB₂, Si₃N₄, TiN, ZrN, Cr₂N or Ti(C,N) or mixed phases or mixtures thereof.

8. A process as claimed in one or more of claims 1 to 5, characterized in that the ceramic powder is AlN, BN or SiC.

## Revendications

1. Procédé pour réduire la quantité d'impuretés carbonées dans des poudres céramiques en fines particules, y compris l'excès de carbone de poudres céramiques obtenues parle procédé carbothermique, caractérisé par le fait que la poudre céramique ou le mélange de poudres céramiques et de carbone est exposé à un traitement thermique dans de l'azote et de l'hydrogène et/ou dans une atmosphère dépourvue d'oxygène et de vapeur d'eau, contenant des composés d'azote et d'hydrogène, à une température comprise dans la plage de 600 à 1700°C.

2. Procédé suivant la revendication 1, caractérisé par le fait que le traitement thermique est conduit dans une atmosphère de NH₃ ou de NH₃ et d'un gaz inerte.

3. Procédé suivant la revendication 2, caractérisé par le fait qu'on introduit l'ammoniac gazeux dans le cas de traitements au-dessus de 1000°C, par celui de deux tubes disposés concentriquement qui se trouve à l'intérieur, l'espace annulaire entre le tube extérieur et le tube intérieur étant refroidi par un courant de gaz inerte.

4. Procédé suivant une ou plusieurs des revendications 1 à 3, caractérisé en ce que le traitement thermique est conduit pendant un intervalle de temps de 0,15 à 200 heures.

5. Procédé suivant une ou plusieurs des revendications 1 à 4, caractérisé par le fait que les poudres céramiques sont des nitrures, carbures, carbonitrures, borures, suboxydes de métaux ou de métalloïdes ou leurs phases mixtes ou leurs mélanges physiques.

6. Procédé suivant une ou plusieurs des revendications 1 à 4, caractérisé par le fait que les poudres céramiques sont des poudres destinées à la production de verres au nitrure, de verres à l'oxynitrure ou de verres SIALON de métaux ou de métalloïdes.

7. Procédé suivant une ou plusieurs des revendications 1 à 5, caractérisé par le fait que les poudres céramiques consistent en B₄C, TiC, ZrC, WC, TiB₂, Si₃N₄, TiN, ZrN, Cr₂N ou Ti(C,N) ou leurs phases mixtes ou leurs mélanges.

8. Procédé suivant une ou plusieurs des revendications 1 à 5, caractérisé par le fait que la poudre céramique consiste en AlN, BN ou SiC.
